# EUROPEAN PATENT APPLICATION

(11) **EP 4 825 585 A1**
(43) Date of publication of application: **21.10.2026**
(21) Application number: 24903073.5
(22) Date of filing: 10.12.2024
(51) Int. Cl.: B32B 27/32, B32B 7/023

(54) **SEALANT FILM AND LAMINATE FILM**

(30) Priority: 12.12.2023 JP 2023209298
(71) Applicant: ZACROS Corporation, Tokyo 112-0002 (JP)
(72) Inventor: KUWABARA, Hiroshi, Tokyo 112-0002 (JP); TAKEDA, Tomokazu, Tokyo 112-0002 (JP); OBIKANE, Miku, Tokyo 112-0002 (JP)
(74) Representative: Godemeyer Blum Lenze Patentanwälte Partnerschaft mbB - werkpatent
(86) International application number: PCT/IB2024/062405
(87) International publication number: WO 2025/126020

(57) **Abstract**

The present invention provides a sealant film and a laminated film which contain a recycled material and are excellent in handleability. More specifically, the present invention relates to sealant film 10 including a recycled material obtained using, as a raw material, a laminate in which a plurality of resin layers consisting only of polyethylene-based resin films are laminated via adhesive layers, wherein sealant film 10 has a multilayer structure of at least two layers or more, and has a virgin resin layer not containing the recycled material on at least one end surface 14, 15 in a thickness direction, and to laminated film 16 including sealant film 10 and base film 17 laminated thereon.

## Description

### TECHNICAL FIELD

The present invention relates to a sealant film and a laminated film.

### BACKGROUND TECHNOLOGY

Patent Document 1 describes a production method including: supplying a synthetic resin containing an aluminum foil piece to an extruder; kneading while crushing the aluminum foil to form pellets; and then dehydrating and drying the pellets taken out from cooling water so that the pellets have a water content of 0.1% or less.

Patent Document 2 describes a laminated film in which a recycled polyethylene layer is laminated with a linear low-density polyethylene layer.

### PRIOR ART DOCUMENTS

### Patent Documents

Patent Document 1: Japanese Unexamined Patent Application, First Publication No. 2009-073028
Patent Document 2: Japanese Unexamined Patent Application, First Publication No. 2023-040660

### SUMMARY OF THE INVENTION

### PROBLEMS TO BE SOLVED BY THE INVENTION

Paragraph [0036] of Patent Document 1 describes manufacturing various molded products such as blocks, bricks, stakes, fences, plates, sheets, injection-molded products, and multilayer containers from recycled pellets, but does not describe the use thereof for sealant films such as packaging bags.

Paragraph [0044] of Patent Document 2 describes the use of a linear low-density polyethylene layer containing no recycled polyethylene as the innermost layer, and paragraph [0086] describes the manufacture of synthetic resin products such as packages using a laminated film having a recycled polyethylene layer, but does not describe the use thereof for a sealant film such as a packaging bag.

A sealant film is used for the manufacture of packaging bags or the like after being laminated with a base film or the like which is another resin film, but the sealant film is treated as a single film before being laminated with another resin film. Therefore, in order to use a laminated film having a recycled polyethylene layer as a sealant film, further improvement is required. When horizontal recycling from a packaging bag to a packaging bag is performed, it is difficult to remove impurities such as adhesives, inks, and additives, and improvement is required to make the film strong enough to be used as a sealant film even when these impurities are mixed.

The present invention has been made in view of the above-mentioned circumstances, and an objective of the present invention is to provide a sealant film having excellent handleability while containing a recycled material, and a laminated film containing the sealant film.

### MEANS FOR SOLVING THE PROBLEM

In order to solve the above-mentioned problems, one aspect of the present invention includes the following aspects.

The first aspect is a sealant film including a recycled material obtained using, as a raw material, a laminate in which a plurality of resin layers consisting only of polyethylene-based resin films are laminated via adhesive layers, wherein the sealant film has a multilayer structure of at least two layers or more, and has a virgin resin layer not containing the recycled material on at least one end surface in a thickness direction.

The second aspect is the first aspect which has virgin resin layers not containing the recycled material on both end surfaces in the thickness direction of the sealant film.

The third aspect is the first or second aspect wherein a virgin resin contained in the sealant film has a density of 0.910 g/cm³ or more and 0.930 g/cm³ or less.

The fourth aspect is any one of the first to third aspects wherein a content ratio of the recycled material with respect to the total weight of the sealant film is 50 wt% or less.

The fifth aspect is any one of the first to fourth aspects wherein the recycled material contains high-density polyethylene.

The sixth aspect is any one of the first to fifth aspects wherein the recycled material contains a printing ink component or a urethane-based adhesive.

The seventh aspect is any one of the first to sixth aspects wherein the sealant film has a total light transmittance of 65% to 90%.

The eighth aspect is a laminated film comprising the sealant film according to any one of the first to seventh aspects and a base film laminated thereon.

### EFFECTS OF INVENTION

According to the present invention, it is possible to provide a sealant film and a laminated film which are excellent in handleability while containing a recycled material.

### BRIEF DESCRIPTION OF THE DRAWINGS

Fig. 1 is a cross-sectional view showing an example of a sealant film according to the present embodiment.
Fig. 2 is a cross-sectional view showing an example of a laminate used as a raw material for a recycled material.
Fig. 3 is a cross-sectional view showing an example of a laminated film including the sealant film according to the present embodiment.

### BEST MODE FOR CARRYING OUT THE INVENTION

Hereinafter, the present invention will be described based on preferred embodiments.

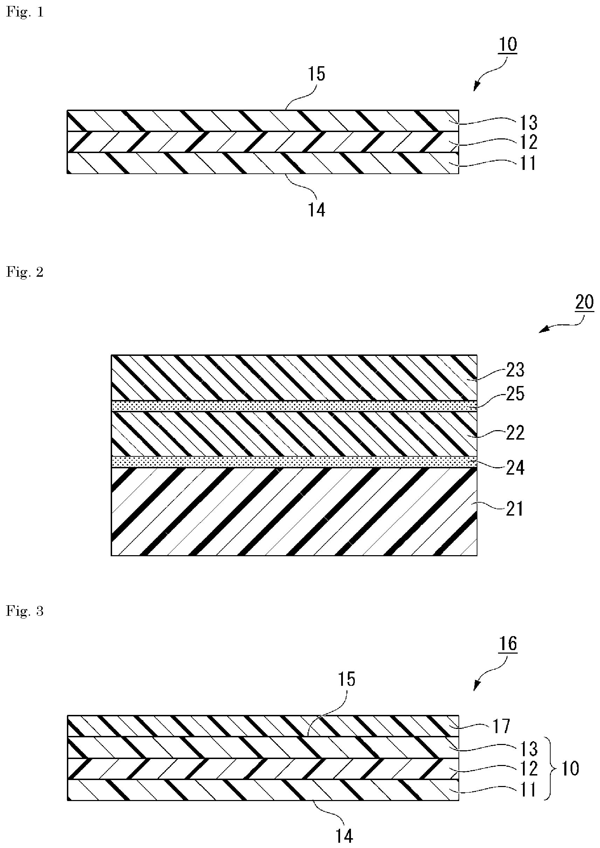

As shown in Fig. 1, sealant film 10 of the present embodiment has a multilayer structure of at least two layers or more. Methods for producing the multilayer structure include multilayer inflation molding, multilayer T-die molding, dry lamination, extrusion lamination, and the like.

The multilayer structure of the illustrated example includes terminal layers 11 and 13 facing both end surfaces in the thickness direction, respectively, and an intermediate layer 12 laminated between terminal layers 11 and 13. The multilayer structure of at least two or more layers may be a multilayer structure of two layers consisting of terminal layers 11 and 13, or a multilayer structure of three or more layers including one or two or more intermediate layers 12.

Sealant film 10 includes a recycled material using a polyethylene-based resin film as a raw material, except for at least one terminal layer 11, 13.

For example, as shown in Fig. 2, the recycled material is obtained by using, as a raw material, laminate 20 in which a plurality of resin layers 21, 22 and 23 consisting only of a polyethylene-based resin film are laminated via adhesive layers 24 and 25. The number of resin layers 21, 22 and 23 is not particularly limited, and is not limited to three layers in the illustrated example and may be two or four or more layers.

At least one terminal layer 11, 13 is a virgin resin layer not containing the recycled material. Since at least one end surface 14, 15 is formed of the virgin resin layer, the sanitary control of the surface in contact with the content is facilitated, and the sealability when sealant films 10 are thermally welded to each other can be improved. It is preferable that both terminal layers 11 and 13 are virgin resin layers, and both end surfaces 14 and 15 do not contain the recycled material.

Examples of the polyethylene-based resin include linear low-density polyethylene (LLDPE), low-density polyethylene (LDPE), medium-density polyethylene (MDPE), high-density polyethylene (HDPE), and the like. The polyethylene-based resin may be a homopolymer of ethylene, or a copolymer mainly composed of ethylene.

Examples of monomers (comonomers) other than ethylene include one kind or two or more kinds of α-olefins such as 1-butene, 1-hexene, and 1-octene; cyclic olefins such as norbornene; vinyl-based monomers such as vinyl acetate, vinyl chloride, and acrylic acid; and the like. When the polyethylene-based resin is copolymerized with a monomer having an ester group such as vinyl acetate, part of the ester group may be saponified to form a copolymer containing vinyl alcohol.

The proportion of ethylene in the constituent monomers of the polyethylene-based resin is preferably 50 wt% or more, and may be, for example, 80 to 100 wt%. The ethylene or comonomer may be a compound derived from fossil resources such as petroleum, a compound derived from biomass such as plants, or a compound obtained by chemical recycling. Chemical recycling refers to a process for producing a compound such as a monomer by a chemical treatment of a raw material of a recycled material.

The resin contained in the polyethylene-based resin layer may be a polyethylene-based resin alone or may contain other resins. The polyethylene-based resin layer is preferably composed of 80 wt% or more, 90 wt% or more, or 95 wt% or more of the polyethylene-based resin. Each polyethylene-based resin layer may be composed of one polyethylene-based resin or two or more polyethylene-based resins.

The polyethylene-based resin may contain an additive other than the resin. The additive is not particularly limited, but includes, for example, an antioxidant, a lubricant, an antiblocking agent, a flame retardant, an ultraviolet absorber, a light stabilizer, an antistatic agent, a coloring agent, a crosslinking agent, and the like. The additive may be a component compatible with the resin, or a component incompatible with the resin.

The virgin resin layer is a polyethylene-based resin layer composed of a virgin polyethylene-based resin. The virgin polyethylene-based resin refers to a resin that is industrially polymerized from a monomer and then used in a product for the first time, and in the following description, the resin may simply be referred to as "virgin resin". The virgin resin may include a monomer obtained by the above-mentioned chemical recycling.

The composition, degree of polymerization, density, melting point, and the like of the virgin resin can be easily controlled so as to have desired physical properties. Therefore, the virgin resin can be used stably, but the environmental stress in the process such as manufacturing and polymerization of the monomer is greater than that of the recycled material.

In the raw material of the recycled material, resin layers 21, 22, 23 are polyethylene-based resin layers composed of a polyethylene-based resin. The polyethylene-based resin of the recycled material refers to a resin that is manufactured by industrial polymerization from a monomer, then recovered after being used in a product or without being used in a product, and reused without being converted back to a monomer by treatment such as crushing and melting. In the following description, it may also be simply referred to as a "recycled material".

Products using the polyethylene-based resin include films, sheets, packaging bags, molded products, and the like. Scraps of films, sheets and the like, used articles of packaging films, packaging bags, and the like are used as the raw materials for the recycled material. Only a laminate in which a plurality of resin layers consisting only of polyethylene-based resin films are laminated with an adhesive layer interposed may be used as a raw material of recycled materials, and other raw materials may be used partially. The ratio of other raw materials may be, for example, 20 wt% or less, 10 wt% or less, or the like.

Recycled materials are subjected to heat history by product processing and the like before recycling, and are subjected to heat history again by processing such as recovery, crushing and melting, and product processing after recycling. Furthermore, in the history before and after recycling, recycled materials are subjected to mechanical, optical, chemical, and other stresses. Therefore, the performance of recycled materials may be inferior to that of virgin resins even when they are processed from raw materials with relatively uniform properties, such as scraps and unused waste materials.

Furthermore, recycled materials may be subjected to processing in a state in which various raw materials are mixed at the time of recycling. For example, polyethylene-based resins with different compositions, degrees of polymerization, densities, melting points, and the like may be processed without sufficient separation and/or without sufficient removal of foreign substances such as additives, impurities, and deposits. Therefore, stable performance may be difficult to obtain, or foreign substances may affect the performance of the resin.

Although it is possible to sort raw materials according to the use of recycled materials, sorting and separation may be difficult when raw materials are composite materials. For example, a polyethylene-based resin film as a raw material may include a laminate containing a resin having a relatively low density such as LDPE and LLDPE, and a resin having a relatively high density such as HDPE and MDPE.

As described above, when laminate 20 in which a plurality of resin layers 21, 22, 23 each composed only of a polyethylene-based resin film are laminated via adhesive layers 24, 25 is used as a raw material, it is difficult to peel off adhesive layers 24, 25 and to separate resin layers 21, 22, 23 even if resin layers 21, 22, 23 are polyethylene-based resin layers of different kinds. Therefore, it is not easy to adjust the quality of the recycled material.

The density of the virgin resin contained in sealant film 10 is preferably 0.910 g/cm³ or more and 0.930 g/cm³ or less. Thus, the processing suitability of the recycled material can be improved. If the density of the virgin resin is too low, blocking may easily occur. The virgin resin used for sealant film 10 is preferably a resin having a relatively low density such as LDPE and LLDPE.

The content ratio of the recycled material to the total weight of the sealant film 10 is preferably 50 wt% or less. By mixing and using the virgin resin having physical properties suitable for the sealant and the recycled material whose quality is difficult to adjust, it is possible to achieve both reduction of environmental stress and assurance of quality. The content ratio of the recycled material may be at least one selected from 50 wt%, 40 wt%, 30 wt%, 20 wt%, 10 wt%, and 5 wt% as an upper limit or a lower limit.

From the viewpoint of quality adjustment of sealant film 10, it is preferable to use a recycled material having physical properties suitable for the sealant, such as LDPE and LLDPE. However, since the raw material of the recycled material is limited to scraps of the sealant material, or the like, it is sometimes difficult to secure the quantity. Therefore, it is preferable that the recycled material contains HDPE.

Since HDPE is suitable as a base film for a polyethylene-based resin film, a composite film containing a base film and a sealant film can be used as laminate 20 of the raw material.

From the viewpoint of quality adjustment of sealant film 10, it is preferable to sufficiently remove foreign materials such as a printing ink component and a urethane-based adhesive. However, processing of the recycled material becomes complicated, and the price may increase. Therefore, it is preferable that the recycled material contains a printing ink component or a urethane-based adhesive. The recycled material containing the printing ink component may be a material having a total light transmittance lower than that of the virgin resin. For example, the total light transmittance of sealant film 10 may be 90% or less. However, compared with a sealant film composed of only a recycled material, the total light transmittance can be relatively higher by having a virgin resin layer containing no recycled material. For example, the total light transmittance of sealant film 10 may be 65% or more. In addition, the sealant film containing a recycled material has a lower total light transmittance than a sealant film of only a virgin resin, and is excellent in light shielding property and concealment property.

The printing ink component is useful for securing a display surface and improving designability when producing a polyethylene-based resin film as a product, and the urethane-based adhesive is useful for adhesion between resin layers 21, 22, 23. Therefore, a composite film containing a printing layer (not shown) and adhesive layers 24, 25 can be used as laminate 20 of the raw material.

Sealant film 10 can be used for laminating base film 17 to produce laminated film 16. Since sealant film 10 accounts for a large proportion of laminated film 16, it is advantageous to increase the recycle rate of sealant film 10 for increasing the recycle rate of laminated film 16.

Examples of base film 17 include, but are not particularly limited to, polyolefinbased resins such as polyethylene (PE) and polypropylene (PP), polyester-based resins such as polyethylene terephthalate (PET), and polyamide-based resins such as nylon (Ny), and the like. Base film 17 may have one layer or two or more layers. In consideration of subsequent recycling, base film 17 is preferably a PE-based resin.

Although not specifically shown, laminated film 16 may have at least one layer selected from a printing layer, an adhesive layer, a barrier resin layer such as ethylene-vinyl alcohol copolymer (EVOH), a metal vapor deposition layer such as aluminum, a metal foil such as aluminum foil, an inorganic vapor deposition layer such as silica or alumina, and an extruded resin layer such as PE, and the like. Sealant film 10 and base film 17 may be bonded with a urethane-based adhesive.

Laminated film 16 may be used for manufacturing a packaging container such as a packaging bag. Specific examples of the packaging bag include a three-side seal bag, a fourside seal bag, a pillow bag, a gusset bag, a standing pouch, and the like.

The dimensions of the packaging bag are not particularly limited, but in the case of a refill container, for example, it is preferable that the height in the vertical direction is about 100 to 500 mm, the width in the lateral direction is about 70 to 300 mm, and the filling amount is about 100 cm³ to 5,000 cm³.

A desired packaged product (packaging bag containing contents) can be obtained by sealing the packaging bag in a state of being filled with a predetermined content. The state of the content is not particularly limited, and examples include fluids such as liquids, powders, and granules, or solids such as articles. The type of the content is not particularly limited, and examples include detergents, medicines, cosmetics, pharmaceuticals, beverages, seasonings, inks, paints, fuels, and the like.

Although the present invention has been described based on preferred embodiments, the present invention is not limited to the above-mentioned embodiments, and various modifications are possible without departing from the gist of the present invention. Modifications include addition, substitution, omission, or other modification of components.

### EXAMPLES

Hereinafter, the present invention will be specifically described with reference to examples.

Sealant film 10 having three layers of outer (terminal layer 13), middle (intermediate layer 12), and inner (terminal layer 11) was manufactured by multilayer inflation according to the layer structure and layer ratio shown in Table 1. The layer ratio is a relative weight ratio obtained in accordance with the product of the thickness and density of each layer. The recycle rate is a weight ratio (wt%) of the recycled material used in each layer. In the layer structure, "R" represents a layer having a recycle rate greater than 0 wt%, and "V" represents a virgin resin layer having a recycle rate of 0 wt%.

As the recycled material, a laminate consisting of a HDPE layer and a LLDPE layer laminated via a printing ink layer and a urethane-based adhesive layer was used as a raw material, and polyethylene-based resin obtained by repelleting was used.

As the virgin resin, C6LLDPE copolymerized with a comonomer having a carbon number of 6 was used. The density of the virgin resin is as shown in Table 1.

**[Table 1]**

| | Layer configuration | | | Layer ratio | | | Recycle rate [%] | | | Virgin resin | |
|---|---|---|---|---|---|---|---|---|---|---|---|
| | Outer | Middle | Inner | Outer | Middle | Inner | Outer | Middle | Inner | Type | Density [g/cm³] |
| Comparative Example 1 | R | R | R | 1 | 1 | 1 | 100 | 100 | 100 | - | - |
| Example 1 | R | R | V | 1 | 1 | 1 | 100 | 100 | 0 | C6LLDPE | 0.903 |
| Example 2 | R | R | V | 1 | 1 | 1 | 75 | 75 | 0 | C6LLDPE | 0.903 |
| Example 3 | V | R | V | 1 | 1 | 1 | 0 | 100 | 0 | C6LLDPE | 0.903 |
| Example 4 | V | R | V | 1 | 1 | 1 | 0 | 100 | 0 | C6LLDPE | 0.918 |
| Example 5 | V | R | V | 1 | 2 | 1 | 0 | 100 | 0 | C6LLDPE | 0.918 |
| Example 6 | V | R | V | 1 | 2 | 1 | 0 | 75 | 0 | C6LLDPE | 0.918 |
| Example 7 | V | R | V | 1 | 1 | 1 | 0 | 75 | 0 | C6LLDPE | 0.918 |
| Example 8 | V | R | V | 1 | 1 | 1 | 0 | 50 | 0 | C6LLDPE | 0.918 |

The results of the evaluation of the sealant films are shown in Table 2. The evaluation methods are as follows.

### (Recycle rate)

The recycle rate of the whole sealant film was calculated by the following equation using the layer ratios (Aₒᵤₜₑᵣ, A_{middle}, Aᵢₙₙₑᵣ) and the recycle rates (Bₒᵤₜₑᵣ, B_{middle}, Bᵢₙₙₑᵣ) of the respective layers of the sealant film. $" Entire recycle rate " = \left({A}_{outer}{B}_{outer}+{A}_{middle}{B}_{middle}+{A}_{inner}{B}_{inner}\right) / \left({A}_{outer}+{A}_{middle}+{A}_{inner}\right)$

### (Processing suitability)

The processing suitability was evaluated on the basis of the following criteria for film formation and blocking.

For film-forming property, "∘" indicates that bubbles are stable, "△" indicates that bubbles are stable with some turbulence, and "×" indicates that bubbles are not stable.

For blocking, "∘" indicates that there is no sticking on the inner surface of the tube, "△" indicates that there is some sticking on the inner surface of the tube but it can be easily peeled off, and "×" indicates that there is sticking on the inner surface of the tube and it cannot be easily peeled off.

### (Dart impact test)

The dart impact test was conducted in accordance with the JIS K 7124-1 Staircase A method. A dart was dropped from a predetermined height of 0.66 m against a sealant film, and the impact fracture mass (g) was measured. When the impact fracture mass was 1,200 g or more, it was recorded as 1,200 or more.

### (Gelbo Flex Test)

The Gelbo Flex test was evaluated by measuring the number of pinholes generated after bending the sealant film 500 or 1,000 times using a BE-1005 Gelbo Flex tester manufactured by Tester Sangyo Co., Ltd. In Table 2, "-" indicates not measured.

### (Total light transmittance)

The total light transmittance was measured in accordance with JIS K 7361. It was measured using NDH4000 manufactured by Nippon Denshoku Industries Co., Ltd.

**[Table 2]**

| | Recycle rate [%] | Processing suitability | | Dart Impact [g] | Gelbo Flex | | Total light transmittance [%] |
|---|---|---|---|---|---|---|---|
| | | Film forming property | Blocking | | 500 times | 1,500 times | |
| Comparative Example 1 | 100 | △ | ○ | 130 | 43 | - | 61.7 |
| Example 1 | 67 | △ | △ | 720 | 6 | - | 66.7 |
| Example 2 | 50 | △ | △ | 1,200 or more | 0 | 9 | 74.2 |
| Example 3 | 33 | ○ | △ | 1,200 or more | 0 | 4 | 82.0 |
| Example 4 | 33 | ○ | ○ | 1,200 or more | 1 | 15 | 79.2 |
| Example 5 | 50 | ○ | ○ | 1,200 or more | 5 | - | 73.4 |
| Example 6 | 38 | ○ | ○ | 1,200 or more | 2 | 16 | 79.0 |
| Example 7 | 25 | ○ | ○ | 1,200 or more | 1 | 10 | 82.8 |
| Example 8 | 17 | ○ | ○ | 1,200 or more | 1 | 8 | 86.0 |

As shown in Table 2, at least good results were obtained with the sealant films of Examples 1 to 8. Moreover, excellent results were obtained with the sealant films of Examples 4 to 8. From this, it is understood that the film forming property and bending resistance are improved according to the present invention.

### DESCRIPTION OF THE REFERENCE NUMERALS

10 Sealant film
11, 13 Terminal layer
12 Intermediate layer
14, 15 End surface
16 Laminated film
17 Base film
20 Laminate
21, 22, 23 Resin layer
24, 25 Adhesive layer

## Claims

1. A sealant film comprising a recycled material obtained using, as a raw material, a laminate in which a plurality of resin layers consisting only of polyethylene-based resin films are laminated via adhesive layers,
wherein the sealant film has a multilayer structure of at least two layers or more, and has a virgin resin layer not containing the recycled material on at least one end surface in a thickness direction.

2. The sealant film according to claim 1, which has virgin resin layers not containing the recycled material on both end surfaces in the thickness direction of the sealant film.

3. The sealant film according to claim 1 or 2, wherein a virgin resin contained in the sealant film has a density of 0.910 g/cm³ or more and 0.930 g/cm³ or less.

4. The sealant film according to any one of claims 1 to 3, wherein a content ratio of the recycled material with respect to the total weight of the sealant film is 50 wt% or less.

5. The sealant film according to any one of claims 1 to 4, wherein the recycled material contains a high-density polyethylene.

6. The sealant film according to any one of claims 1 to 5, wherein the recycled material contains a printing ink component or a urethane-based adhesive.

7. The sealant film according to any one of claims 1 to 6, wherein the sealant film has a total light transmittance of 65% to 90%.

8. A laminated film comprising the sealant film according to any one of claims 1 to 7 and a base film laminated thereon.
